(19) **Europäisches Patentamt / European Patent Office / Office européen des brevets**

(11) **EP 1 570 344 B1**

(12) # EUROPEAN PATENT SPECIFICATION

(45) Date of publication and mention of the grant of the patent:
**12.12.2007 Bulletin 2007/50**

(51) Int Cl.:
***G06F 9/38*** (2006.01)

(21) Application number: **03781552.9**

(22) Date of filing: **31.10.2003**

(86) International application number:
**PCT/US2003/034557**

(87) International publication number:
**WO 2004/042560 (21.05.2004 Gazette 2004/21)**

(54) **PIPELINE COPROCESSOR**

PIPELINE-COPROZESSOR

PROCESSEUR AUXILIAIRE EN PIPELINE

(84) Designated Contracting States:
**DE ES FR GB**

(30) Priority: **31.10.2002 US 422503 P**
**09.10.2003 US 683929**
**09.10.2003 US 683932**
**09.10.2003 US 684053**
**09.10.2003 US 684057**
**09.10.2003 US 684102**

(43) Date of publication of application:
**07.09.2005 Bulletin 2005/36**

(73) Proprietor: **Lockheed Martin Corporation**
**Manassas, VA 20110-4157 (US)**

(72) Inventors:
• **MATHUR, Chandan**
  **Manassas, VA 20109 (US)**
• **HELLENBACH, Scott**
  **Amessville, VA 20106 (US)**
• **RAPP, John, W.**
  **Manassas, VA 20110 (US)**
• **JACKSON, Larry**
  **Manassas, VA 20112 (US)**
• **JONES, Mark**
  **Centreville, VA 20120 (US)**
• **CHERASARO, Troy**
  **Culpeper, VA 22701 (US)**

(74) Representative: **Maccalli, Marco**
**Maccalli & Pezzoli S.r.l.,**
**Via Settembrini, 40**
**20124 Milano (IT)**

(56) References cited:
**EP-A- 0 945 788          EP-A- 1 061 438**
**US-A- 5 583 964**

• **LECURIEUX-LAFAYETTE G: "UN SEUL FPGA DOPE LETRAITEMENT D'IMAGES" ELECTRONIQUE, CEP COMMUNICATION, PARIS, FR, no. 55, 1996, pages 98,101-103, XP000551946 ISSN: 1157-1152**
• **VERMEULEN F ET AL: "Flexible hardware acceleration for multimedia oriented microprocessors" MICRO-33. PROCEEDINGS OF THE 33RD. ANNUAL ACM/IEEE INTERNATIONAL SYMPOSIUM ON MICROARCHITECTURE. MONTEREY, CA, DEC. 10 - 13, 2000, PROCEEDINGS OF THE ANNUAL ACM/IEEE INTERNATIONAL SYMPOSIUM ON MICROARCHITECTURE, LOS ALAMITOS, CA : IEEE COMP. SOC, US, 10 December 2000 (2000-12-10), pages 171-177, XP010528885 ISBN: 0-7695-0924-X**

## Description

## CLAIM OF PRIORITY

This application claims priority to U.S. Provisional Application Serial No. 60/422,503, filed on October 31, 2002, which is incorporated by reference.

## CROSS REFERENCE TO RELATED APPLICATIONS

This application is related to U.S. Publication Nos. 2004/0181621 entitled COMPUTING MACHINE HAVING IMPROVED COMPUTING ARCHITECTURE AND RELATED SYSTEM AND METHOD; 2004/0136241 entitled PIPELINE ACCELERATOR FOR IMPROVED COMPUTING ARCHITECTURE AND RELATED SYSTEM AND METHOD; 2004/0170070 entitled PROGRAMMABLE CIRCUIT AND RELATED COMPUTING MACHINE AND METHOD; and 2004/0130927 entitled PIPELINE ACCELERATOR HAVING MULTIPLE PIPELINE UNITS AND RELATED COMPUTING MACHINE AND METHOD; all filed on October 9, 2003, and having a common owner.

## BACKGROUND

A common computing architecture for processing relatively large amounts of data in a relatively short period of time includes multiple interconnected processors that share the processing burden. By sharing the processing burden, these multiple processors can often process the data more quickly than a single processor can for a given clock frequency. For example, each of the processors can process a respective portion of the data or execute a respective portion of a processing algorithm.

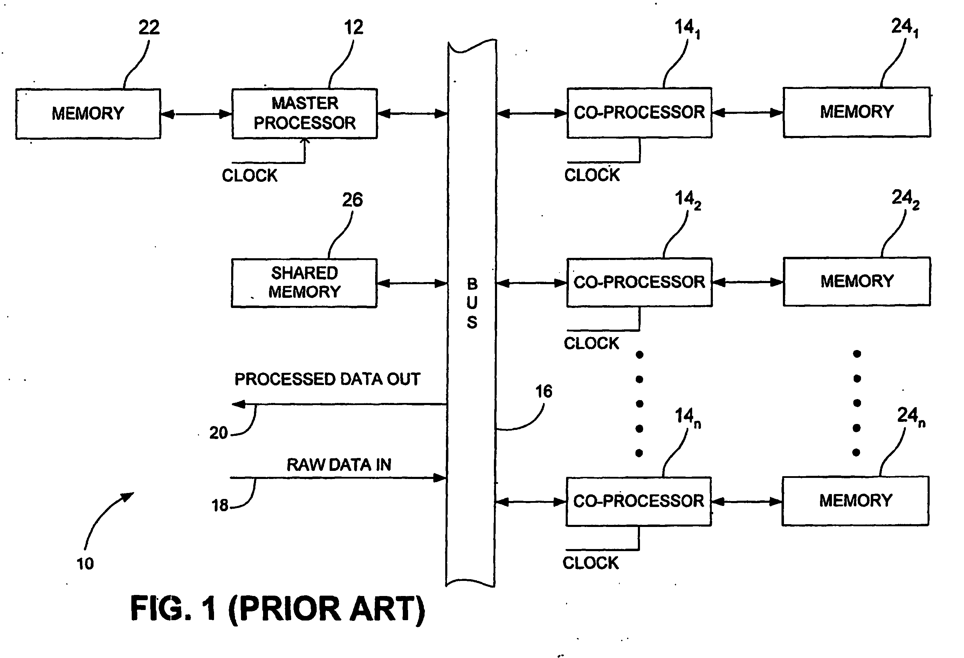

FIG. 1 is a schematic block diagram of a conventional computing machine 10 having a multi-processor architecture. The machine 10 includes a master processor 12 and coprocessors $14_1$ - $14_n$, which communicate with each other and the master processor via a bus 16, an input port 18 for receiving raw data from a remote device (not shown in FIG. 1), and an output port 20 for providing processed data to the remote source. The machine 10 also includes a memory 22 for the master processor 12, respective memories $24_1$ - $24_n$ for the coprocessors $14_1$ - $14_n$, and a memory 26 that the master processor and coprocessors share via the bus 16. The memory 22 serves as both a program and a working memory for the master processor 12, and each memory $24_1$ - $24_n$ serves as both a program and a working memory for a respective coprocessor $14_1$ - $14_n$. The shared memory 26 allows the master processor 12 and the coprocessors 14 to transfer data among themselves, and from/to the remote device via the ports 18 and 20, respectively. The master processor 12 and the coprocessors 14 also receive a common clock signal that controls the speed at which the machine 10 processes the raw data.

In general, the computing machine 10 effectively divides the processing of raw data among the master processor 12 and the coprocessors 14. The remote source (not shown in FIG.1) such as a sonar array (FIG. 5) loads the raw data via the port 18 into a section of the shared memory 26, which acts as a first-in-first-out (FIFO) buffer (not shown) for the raw data. The master processor 12 retrieves the raw data from the memory 26 via the bus 16, and then the master processor and the coprocessors 14 process the raw data, transferring data among themselves as necessary via the bus 16. The master processor 12 loads the processed data into another FIFO buffer (not shown) defined in the shared memory 26, and the remote source retrieves the processed data from this FIFO via the port 20.

In an example of operation, the computing machine 10 processes the raw data by sequentially performing n + 1 respective operations on the raw data, where these operations together compose a processing algorithm such as a Fast Fourier Transform (FFT). More specifically, the machine 10 forms a data-processing pipeline from the master processor 12 and the coprocessors 14. For a given frequency of the clock signal, such a pipeline often allows the machine 10 to process the raw data faster than a machine having only a single processor.

After retrieving the raw data from the raw-data FIFO (not shown) in the memory 26, the master processor 12 performs a first operation, such as a trigonometric function, on the raw data. This operation yields a first result, which the processor 12 stores in a first-result FIFO (not shown) defined within the memory 26. Typically, the processor 12 executes a program stored in the memory 22, and performs the above-described actions under the control of the program. The processor 12 may also use the memory 22 as working memory to temporarily store data that the processor generates at intermediate intervals of the first operation.

Next, after retrieving the first result from the first-result FIFO (not shown) in the memory 26, the coprocessor $14_1$ performs a second operation, such as a logarithmic function, on the first result. This second operation yields a second result, which the coprocessor $14_1$ stores in a second-result FIFO (not shown) defined within the memory 26. Typically, the coprocessor $14_1$ executes a program stored in the memory $24_1$, and performs the above-described actions under the control of the program. The coprocessor $14_1$ may also use the memory $24_1$ as working memory to temporarily store data that the coprocessor generates at intermediate intervals of the second operation.

Then, the coprocessors $24_2$ - $24_n$ sequentially perform third - $n^{th}$ operations on the second - $(n-1)^{th}$ results in a manner similar to that discussed above for the coprocessor $24_1$.

The $n^{th}$ operation, which is performed by the coprocessor $24_n$, yields the final result, i.e., the processed data. The coprocessor $24_n$ loads the processed data into a processed-data FIFO (not shown) defined within the memory **26,** and the remote device (not shown in **FIG.1)** retrieves the processed data from this FIFO.

Because the master processor **12** and coprocessors **14** are simultaneously performing different operations of the processing algorithm, the computing machine **10** is often able to process the raw data faster than a computing machine having a single processor that sequentially performs the different operations. Specifically, the single processor cannot retrieve a new set of the raw data until it performs all n + 1 operations on the previous set of raw data. But using the pipeline technique discussed above, the master processor **12** can retrieve a new set of raw data after performing only the first operation. Consequently, for a given clock frequency, this pipeline technique can increase the speed at which the machine **10** processes the raw data by a factor of approximately n + 1 as compared to a single-processor machine (not shown in **FIG. 1**).

Alternatively, the computing machine **10** may process the raw data in parallel by simultaneously performing n + 1 instances of a processing algorithm, such as an FFT, on the raw data. That is, if the algorithm includes n + 1 sequential operations as described above in the previous example, then each of the master processor **12** and the coprocessors **14** sequentially perform all n + 1 operations on respective sets of the raw data. Consequently, for a given clock frequency, this parallel-processing technique, like the above-described pipeline technique, can increase the speed at which the machine **10** processes the raw data by a factor of approximately n + 1 as compared to a single-processor machine (not shown in **FIG. 1**).

Unfortunately, although the computing machine **10** can process data more quickly than a single-processor computer machine (not shown in **FIG. 1**), the data-processing speed of the machine **10** is often significantly less than the frequency of the processor clock. Specifically, the data-processing speed of the computing machine **10** is limited by the time that the master processor **12** and coprocessors **14** require to process data. For brevity, an example of this speed limitation is discussed in conjunction with the master processor **12,** although it is understood that this discussion also applies to the coprocessors **14.** As discussed above, the master processor **12** executes a program that controls the processor to manipulate data in a desired manner. This program includes a sequence of instructions that the processor **12** executes. Unfortunately, the processor **12** typically requires multiple clock cycles to execute a single instruction, and often must execute multiple instructions to process a single value of data. For example, suppose that the processor **12** is to multiply a first data value A (not shown) by a second data value B (not shown). During a first clock cycle, the processor **12** retrieves a multiply instruction from the memory **22.** During second and third clock cycles, the processor **12** respectively retrieves A and B from the memory **26.** During a fourth clock cycle, the processor **12** multiplies A and B, and, during a fifth clock cycle, stores the resulting product in the memory **22** or **26** or provides the resulting product to the remote device (not shown). This is a best-case scenario, because in many cases the processor **12** requires additional clock cycles for overhead tasks such as initializing and closing counters. Therefore, at best the processor **12** requires five clock cycles, or an average of 2.5 clock cycles per data value, to process A and B..

Consequently, the speed at which the computing machine **10** processes data is often significantly lower than the frequency of the clock that drives the master processor **12** and the coprocessors **14.** For example, if the processor **12** is clocked at 1.0 Gigahertz (GHz) but requires an average of 2.5 clock cycles per data value, than the effective data-processing speed equals (1.0 GHz)/2.5 = 0.4 GHz. This effective data-processing speed is often characterized in units of operations per second. Therefore, in this example, for a clock speed of 1.0 GHz, the processor **12** would be rated with a data-processing speed of 0.4 Gigaoperations/second (Gops).

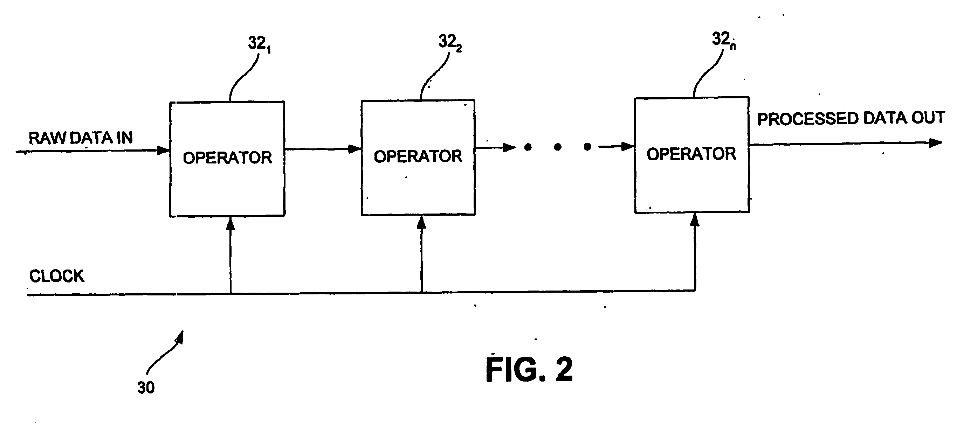

**FIG. 2** is a block diagram of a hardwired data pipeline **30** that can typically process data faster than a processor can for a given clock frequency, and often at substantially the same rate at which the pipeline is clocked. The pipeline 30 includes operator circuits $32_1$ - $32_n$ that each perform a respective operation on respective data without executing program instructions. That is, the desired operation is "burned in" to a circuit **32** such that it implements the operation automatically, without the need of program instructions. By eliminating the overhead associated with executing program instructions, the pipeline **30** can typically perform more operations per second than a processor can for a given clock frequency.

For example, the pipeline **30** can often solve the following equation faster than a processor can for a given clock frequency:

$$(1) \qquad Y(x_k) = (5x_k + 3)2^{x_k}$$

where $x_k$ represents a sequence of raw data values. In this example, the operator circuit $32_1$ is a multiplier that calculates $5x_k$, the circuit $32_2$ is an adder that calculates $5x_k + 3$, and the circuit $32_n$ (n = 3) is a multiplier that calculates $(5x_k + 3)2^{x_k}$.

During a first clock cycle k=1, the circuit $32_1$ receives data value $x_1$ and multiplies it by 5 to generate $5x_1$.

During a second clock cycle k = 2, the circuit $32_2$ receives $5x_1$ from the circuit $32_1$ and adds 3 to generate $5x_1 + 3$. Also, during the second clock cycle, the circuit $32_1$ generates $5x_2$.

[19] During a third clock cycle k = 3, the circuit $32_3$ receives $5x_1 + 3$ from the circuit $32_2$ and multiplies by $2^{x_1}$ (effectively right shifts $5x_1 + 3$ by $x_1$) to generate the first result $(5x_1 + 3)2^{x_1}$. Also during the third clock cycle, the circuit $32_1$ generates $5x_3$ and the circuit $32_2$

generates $5x_2 + 3$.

The pipeline 30 continues processing subsequent raw data values $x_k$ in this manner until all the raw data values are processed.

Consequently, a delay of two clock cycles after receiving a raw data value $x_1$ - this delay is often called the latency of the pipeline 30 - the pipeline generates the result $(5x_1 + 3)2^{x1}$, and thereafter generates one result each clock cycle.

Disregarding the latency, the pipeline 30 thus has a data-processing speed equal to the clock speed. In comparison, assuming that the master processor 12 and coprocessors 14 (FIG. 1) have data-processing speeds that are 0.4 times the clock speed as in the above example, the pipeline 30 can process data 2.5 times faster than the computing machine 10 (FIG. 1) for a given clock speed.

Still referring to FIG. 2, a designer may choose to implement the pipeline 30 in a programmable logic IC (PLIC), such as a field-programmable gate array (FPGA), because a PLIC allows more design and modification flexibility than does an application specific IC (ASIC). To configure the hardwired connections within a PLIC, the designer merely sets interconnection-configuration registers disposed within the PLIC to predetermined binary states. The combination of all these binary states is often called "firmware." Typically, the designer loads this firmware into a nonvolatile memory (not shown in FIG. 2) that is coupled to the PLIC. When one "turns on" the PLIC, it downloads the firmware from the memory into the interconnection-configuration registers. Therefore, to modify the functioning of the PLIC, the designer merely modifies the firmware and allows the PLIC to download the modified firmware into the interconnection-configuration registers. This ability to modify the PLIC by merely modifying the firmware is particularly useful during the prototyping stage and for upgrading the pipeline 30 "in the field".

Unfortunately, the hardwired pipeline 30 typically cannot execute all algorithms, particularly those that entail significant decision making. A processor can typically execute a decision-making instruction (e.g., conditional instructions such as "if A, then go to B, else go to C") approximately as fast as it can execute an operational instruction (e.g., "A + B") of comparable length. But although the pipeline 30 may be able to make a relatively simple decision (e.g., "A > B?"), it typically cannot execute a relatively complex decision (e.g., "if A, then go to B, else go to C"). And although one may be able to design the pipeline 30 to execute such a complex decision, the size and complexity of the required circuitry often makes such a design impractical, particularly where an algorithm includes multiple different complex decisions.

Consequently, processors are typically used in applications that require significant decision making, and hardwired pipelines are typically limited to "number crunching" applications that entail little or no decision making.

Furthermore, as discussed below, it is typically much easier for one to design/modify a processor-based computing machine, such as the computing machine 10 of FIG. 1, than it is to design/modify a hardwired pipeline such as the pipeline 30 of FIG. 2, particularly where the pipeline 30 includes multiple PLICs.

Computing components, such as processors and their peripherals (e.g., memory), typically include industry-standard communication interfaces that facilitate the interconnection of the components to form a processor-based computing machine.

Typically, a standard communication interface includes two layers: a physical layer and an service layer.

The physical layer includes the circuitry and the corresponding circuit interconnections that form the interface and the operating parameters of this circuitry. For example, the physical layer includes the pins that connect the component to a bus, the buffers that latch data received from the pins, and the drivers that drive data onto the pins. The operating parameters include the acceptable voltage range of the data signals that the pins receive, the signal timing for writing and reading data, and the supported modes of operation (e.g., burst mode, page mode). Conventional physical layers include transistor-transistor logic (TTL) and RAMBUS.

The service layer includes the protocol by which a computing component transfers data. The protocol defines the format of the data and the manner in which the component sends and receives the formatted data. Conventional communication protocols include file-transfer protocol (FTP) and TCP/IP (expand).

Consequently, because manufacturers and others typically design computing components having industry-standard communication layers, one can typically design the interface of such a component and interconnect it to other computing components with relatively little effort. This allows one to devote most of his time to the designing the other portions of the computing machine, and to easily modify the machine by adding or removing components.

Designing a computing component that supports an industry-standard communication layer allows one to save design time by using an existing physical-layer design from a design library. This also insures that he/she can easily interface the component to off-the-shelf computing components.

And designing a computing machine using computing components that support a common industry-standard communication layer allows the designer to interconnect the components with little time and effort. Because the components support a common interface layer, the designer can interconnect them via a system bus with little design effort. And because the supported interface layer is an industry standard, one can easily modify the machine. For example, one can add different components and peripherals to the machine as the system design evolves, or can easily add/design next-generation components as the technology evolves. Furthermore, because the components support a common industry-standard service layer, one can incorporate into the computing machine's software an existing software module that implements the corresponding protocol. Therefore, one can interface the components with little effort because the interface design is essentially already in place, and thus can focus on designing the portions (e.g., software) of the machine that cause the machine to perform the desired function(s).

But unfortunately, there are no known industry-standard communication layers for components, such as PLICs, used to form hardwired pipelines such as the pipeline 30 of **FIG. 2**.

Consequently, to design a pipeline having multiple PLICs, one typically spends a significant amount of time and exerts a significant effort designing and debugging the communication layer between the PLICs "from scratch." Typically, such an ad hoc communication layer depends on the parameters of the data being transferred between the PLICs. Likewise, to design a pipeline that interfaces to a processor, one would have to spend a significant amount of time and exert a significant effort in designing and debugging the communication layer between the pipeline and the processor from scratch.

Similarly, to modify such a pipeline by adding a PLIC to it, one typically spends a significant amount of time and exerts a significant effort designing and debugging the communication layer between the added PLIC and the existing PLICs. Likewise, to modify a pipeline by adding a processor, or to modify a computing machine by adding a pipeline, one would have to spend a significant amount of time and exert a significant effort in designing and debugging the communication layer between the pipeline and processor.

Consequently, referring to **FIGS. 1** and **2,** because of the difficulties in interfacing multiple PLICs and in interfacing a processor to a pipeline, one is often forced to make significant tradeoffs when designing a computing machine. For example, with a processor-based computing machine, one is forced to trade number-crunching speed for complex decision-making ability and design/modfication flexibility. Conversely, with a hardwired pipeline-based computing machine, one is forced to trade complex-decision-making ability and design/modification flexibility for number-crunching speed. Furthermore, because of the difficulties in interfacing multiple PLICs, it is often impractical for one to design a pipeline-based machine having more than a few PLICs. As a result, a practical pipeline-based machine often has limited functionality. And because of the difficulties in interfacing a processor to a PLIC, it would be impractical to interface a processor to more than one PLIC. As a result, the benefits obtained by combining a processor and a pipeline would be minimal.

Therefore, a need has arisen for a new computer architecture that allows one to combine the decision-making ability of a processor-based machine with the number-crunching speed of a hardwired-pipeline-based machine.

EP - A - 0 945 788 discloses a data processing system including a digital signal processor core and a co-processor, that responds to commands from the digital signal processor core. The Applicant observes that the commands sent by the digital signal processor include opcodes defining the computation type, thus the commands are programming instructions for the co-processor, and the co-processor has to execute these programming instructions to process and generate resulting data. *The Applicant also observes that, in operation, the digital signal processor core controls the data and coefficients used by the co-processor by loading the data to be processed into the data memory and the coefficients into the coefficient memory. Following the transfer of data to be processed, the digital signal processor core signals the co-processor with the command for the desired signal processing algorithm. Thus, the commands sent by the digital signal processor core to the coprocessor are part of the program code that is executed by the digital signal processor core in the process of generation of the data to be fed to the co-processor.*

S. Bakshi et al., "Partitioning and Pipelining for Performance-Constrained Hardrward/Software Systems", IEEE Trans. on VLSI Systems, Vol. 7, No. 4, December 1999, pages 419-432*, disclose (Figure 2) a pipelined architecture consisting of one or more processors, one or more ASICs, and one or more memory chips that all communicate over one or more buses. The Applicant observes that ASICs are hardwired circuits, that; after cannot be (re-)configured.*

G. Lecurieux-Lafayette, "Un seul FPGA dope le traitement d'images", Electronique, CEP communication, Paris, No. 55, 1996. pp. 98, 101-103 describe an "Image computer" comprising a microprocessor and a coprocessor based on an FPGA, wherein the FPGA is reconfigurable during its operation.

## SUMMARY

In an embodiment of the invention, a peer-vector machine as set forth in claim 1, and a method as set forth in claim are provided.

Because the peer-vector machine includes both a processor and a hardwired pipeline accelerator, it can often process data more efficiency than a computing machine that includes only processors or only hardwired pipelines. For example, one can design the peer vector machine so that the host processor performs decision-making and non-mathematically intensive operations while the accelerator performs mathematically intensive operations. By shifting the mathematically intensive operations to the accelerator, the peer-vector machine often can, for a given clock frequency, process data at a speed that surpasses the speed at which a processor-only machine can process the data.

**BRIEF DESCRIPTION OF THE DRAWINGS**

**FIG. 1** is a block diagram of a computing machine having a conventional multi-processor architecture.

**FIG. 2** is a block diagram of a conventional hardwired pipeline.

**FIG. 3** is schematic block diagram of a computing machine having a peer-vector architecture according to an embodiment of the invention.

**FIG. 4** is a schematic block diagram of an electronic system that incorporates the peer-vector computing machine of **FIG. 3** according to an embodiment of the invention.

DETAILED DESCRIPTION

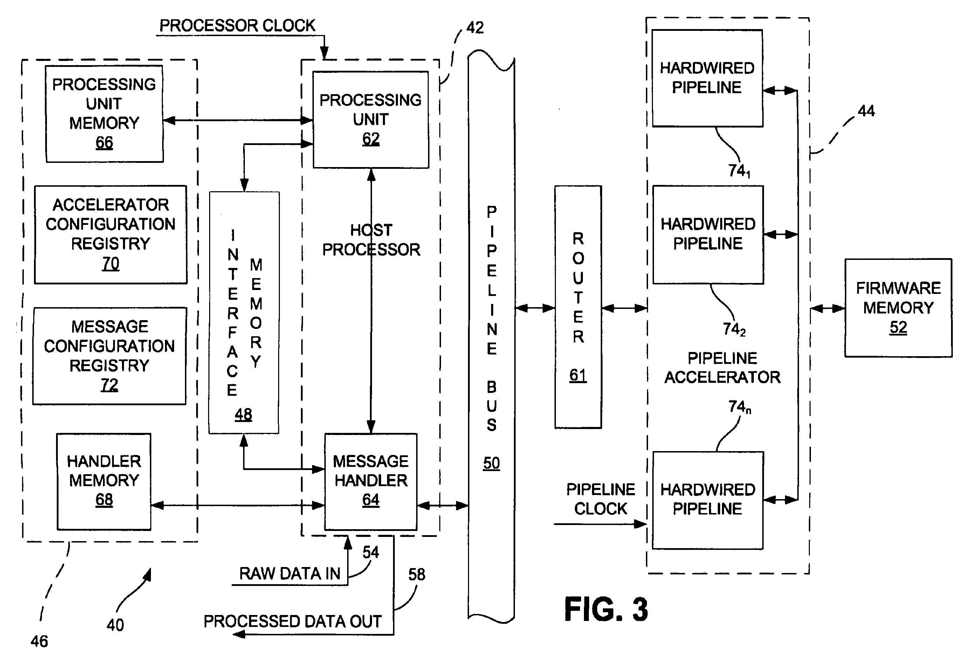

**FIG. 3** is a schematic block diagram of a computing machine **40,** which has a peer-vector architecture according to an embodiment of the invention. In addition to a host processor **42,** the peer-vector machine **40** includes a pipeline accelerator **44,** which performs at least a portion of the data processing, and which thus effectively replaces the bank of coprocessors **14** in the computing machine **10** of **FIG. 1**. Therefore, the host-processor **42** and the accelerator **44** are "peers" that can transfer data vectors back and forth. Because the accelerator **44** does not execute program instructions, it typically performs mathematically intensive operations on data significantly faster than a bank of coprocessors can for a given clock frequency. Consequently, by combing the decision-making ability of the processor **42** and the number-crunching ability of the accelerator **44,** the machine **40** has the same abilities as, but can often process data faster than, a conventional computing machine such as the machine **10**. Furthermore, as discussed in previously cited U.S. Publication Nos. 2004/0181621 entitled COMPUTING MACHINE HAVING IMPROVED COMPUTING ARCHITECTURE AND RELATED SYSTEM AND METHOD and 2004/0136241 entitled PIPELINE ACCELERATOR FOR IMPROVED COMPUTING ARCHITECTURE AND RELATED SYSTEM AND METHOD, providing the accelerator **44** with the same communication layer as the host processor **42** facilitates the design and modification of the machine **40,** particularly where the communications layer is an industry standard. And where the accelerator **44** includes multiple components (e.g., PLICs), providing these components with this same communication layer facilitates the design and modification of the accelerator, particularly where the communication layer is an industry standard. Moreover, the machine **40** may also provide other advantages as described below and in the previously cited patent applications.

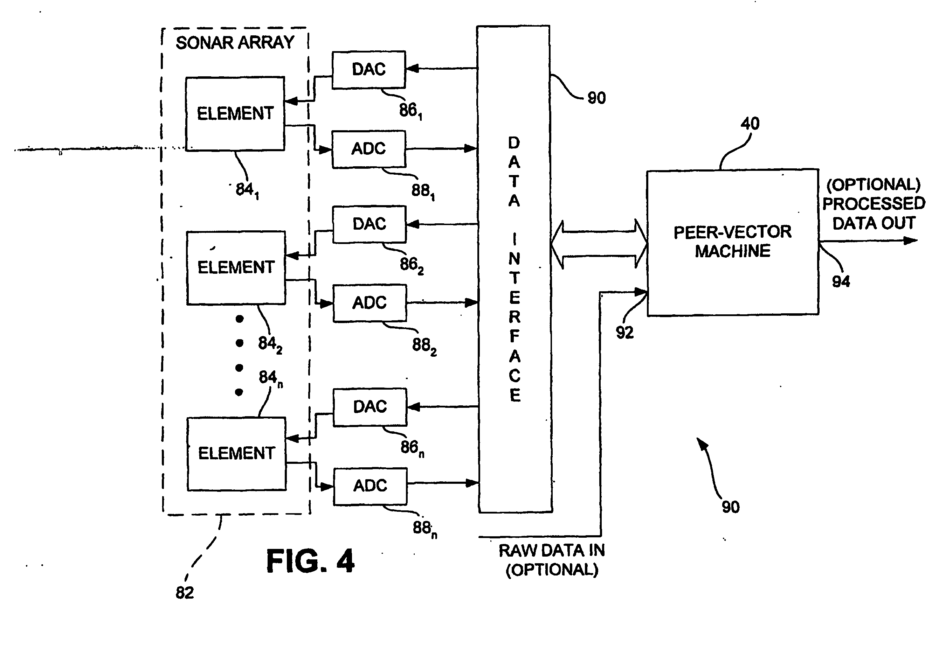

In addition to the host processor **42** and the pipeline accelerator **44,** the peer-vector computing machine **40** includes a processor memory **46,** an interface memory **48,** a bus **50,** a firmware memory **52,** optional raw-data input ports **54** and **92** (port **92** shown in **FIG. 4),** optional processed-data output ports **58** and **94** (port **94** shown in **FIG. 4),** and an optional router **61.**

The host processor **42** includes a processing unit **62** and a message handler **64,** and the processor memory **46** includes a processing-unit memory **66** and a handler memory **68,** which respectively serve as both program and working memories for the processor unit and the message handler. The processor memory **46** also includes an accelerator-configuration registry **70** and a message-configuration registry **72,** which store respective configuration data that allow the host processor **42** to configure the functioning of the accelerator **44** and the structure of the messages that the message handler **64** generates.

The pipeline accelerator **44** is disposed on at least one PLIC (not shown) and includes hardwired pipelines $74_1$-$74_n$, which process respective data without executing program instructions. The firmware memory **52** stores the configuration firmware for the accelerator **44.** If the accelerator **44** is disposed on multiple PLICs, these PLICs and their respective firmware memories may be disposed on multiple circuit boards, *i.e.,* daughter cards (not shown). The accelerator **44** and daughter cards are discussed further in previously cited U.S. Publication Nos. 2004/0136241 entitled PIPELINE ACCELERATOR FOR IMPROVED COMPUTING ARCHITECTURE AND RELATED SYSTEM AND METHOD and 2004/0130927 entitled PIPELINE ACCELERATOR HAVING MULTIPLE PIPELINE UNITS AND RELATED COMPUTING MACHINE AND METHOD. Alternatively, the accelerator **44** may be disposed on at least one ASIC, and thus may have internal interconnections that are unconfigurable. In this alternative, the machine **40** may omit the firmware memory **52.** Furthermore, although the accelerator **44** is shown including multiple pipelines **74**, it may include only a single pipeline.

Still referring to **FIG. 3,** the operation of the peer-vector machine **40** is discussed below according to an embodiment of the invention.

**Configuring the Peer-Vector Machine**

When the peer-vector machine **40** is first activated, the processing unit **62** configures the message handler **64** and the pipeline accelerator **44** (where the accelerator is configurable) so that the machine will execute the desired algorithm. Specifically, the processing unit **62** executes a host application program that is stored in the memory **66** and that causes the processing unit to configure the message handler **64** and the accelerator **44** as discussed below.

To configure the message handler **64,** the processing unit **62** retrieves message-format information from the registry **72** and provides this format information to the message handler, which stores this information in the memory **68.** When the machine **40** processes data as discussed below, the message handler **64** uses this format information to generate and decipher data messages that have a desired format. In one embodiment, the format information is written in Extensible Markup Language (XML), although it can be written in another language or data format. Because the processing unit *62* configures the message handler *64* each time the peer-vector machine *40* is activated, one can modify the message format merely by modifying the format information stored in the registry *72.* Alternatively, an external message-configuration library (not shown) can store information for multiple message formats, and one can design and/or modify the host application so that the processing unit *62* updates the registry *72* from selected parts of the library, and then downloads the desired format information from the updated registry to the message handler *64.* The message format and the generating and deciphering of messages are further discussed below and in previously cited U.S. Publication No. 2004/0181621 entitled COMPUTING MACHINE HAVING IMPROVED COMPUTING ARCHITECTURE AND RELATED SYSTEM AND METHOD.

Similarly, to configure the interconnection layout of the pipeline accelerator *44,* the processing unit *62* retrieves configuration firmware from the registry *70* and downloads this firmware to the memory *52* via the message handler *64* and the bus *50.* The accelerator *44* then configures itself by downloading the firmware from the memory *52* into its interconnection-configuration registers (not shown). Because the processing unit *62* configures the accelerator *44* each time the peer-vector machine *40* is activated, one can modify the interconnection-layout- and thus the functioning - of the accelerator *44* merely by modifying the firmware stored in the registry *70.* Alternatively, an external accelerator-configuration library (not shown) can store firmware for multiple configurations of the accelerator *44,* and one can design and/or modify the host application so that the processing unit *62* updates the registry *70* from selected parts of the library, and then downloads the desired firmware from the updated registry to the memory *52.* Furthermore, the external library or the registry *70* may store firmware modules that define different portions and/or functions of the accelerator *44.* Therefore, one can use these modules to facilitate the design and/or modification of the accelerator *44.* In addition, the processing unit *62* may use these modules to modify the accelerator *44* while the machine *40* is processing data. The interconnection-configuration of the accelerator *44* and the firmware modules are discussed further in previously cited U.S. Publication No. 2004/0170070 entitled PROGRAMMABLE CIRCUIT AND RELATED COMPUTING MACHINE AND METHOD.

The processing unit *62* may also "soft configure" the pipeline accelerator *44* while the peer-vector machine *40* is processing data. That is, the processing unit *62* may configure the functioning of the accelerator *44* without altering the accelerator's interconnection layout. Such soft configuration is discussed further below and in U.S. Publication No. 2004/0136241 entitled PIPELINE ACCELERATOR FOR IMPROVED COMPUTING ARCHITECTURE AND RELATED SYSTEM AND METHOD.

## Processing Data with the Peer-Vector Machine

In general, the peer-vector machine *40* effectively divides the processing of raw data between the host processor *42* and the pipeline accelerator *44.* For example, the host processor *42* may perform most or all of the decision-making operations related to the data, and the accelerator *44* may perform most or all of the mathematically intensive operations on the data. However, the machine *40* can divide the data processing in any desired manner.

## Operation of the Host Processor

In one embodiment, the host processor *42* receives the raw data from and provides the resulting processed data to a remote device such as a sonar array **(FIG. 4).**

The host processor *42* first receives the raw data from the remote device via the input port *54* or the bus *50.* The peer-vector machine *40* may include a FIFO (not shown) for buffering the received raw data.

Next, the processing unit *62* prepares the raw data for processing by the pipeline accelerator *44.* For example, the unit *62* may determine, e.g., which of the raw data to send to the accelerator *44* or in which sequence to send the raw data. Or, the unit *62* may process the raw data to generate intermediate data for sending to the accelerator *44.* The preparation of the raw data is further discussed in previously cited U.S. Publication No. 2004/0181621 entitled COMPUTING MACHINE HAVING IMPROVED COMPUTING ARCHITECTURE AND RELATED SYSTEM AND METHOD.

While preparing the raw data, the processing unit *54* may also generate one or more "soft-configuration" commands to modify the functioning of the accelerator *44.* Unlike the firmware that configures the interconnection layout of the accelerator *44* when the machine *40* is activated, a soft-configuration command controls the functioning of the accelerator without altering its interconnection layout. For example, a soft-configuration command may control the size of the data strings (e.g., 32 bits or 64 bits) that the accelerator *44* processes. Soft configuration of the accelerator *44* is discussed further in previously cited U.S. Publication No. 2004/0136241 entitled PIPELINE ACCELERATOR FOR IMPROVED COMPUTING ARCHITECTURE AND RELATED SYSTEM AND METHOD.

The processing unit *62* then loads the prepared data and/or soft-configuration command(s) into a corresponding location of the interface memory *48,* which acts as a FIFO buffer between the unit *62* and the accelerator *44.*

Next, the message handler *64* retrieves the prepared data and/or software command(s) from the interface memory *48* and generates message objects that include the data and/or command(s) and related information. Typically, the accelerator *44* needs four identifiers that describe the data/command(s) and the related information (collectively "information"): **a)** the information's intended destination (*e.g.,* the pipeline *$74_1$*)*, **b)** the priority (e.g., should the accelerator process this data before or after previously received data), **c)** the length or the end of the message object, and **d**) the unique instance of the data (e.g., sensor signal number nine from an array of one thousand sensors). To facilitate this determination, the message handler *64* generates message objects that have a predetermined format as discussed above. In addition to the prepared data/soft-configuration command (s), a message object typically includes a header that includes the four above-described identifiers and that may also include identifiers that describe the type of information that object includes (e.g., data, command), and the algorithm by which the data is to be processed. This latter identifier is useful where the destination pipeline 74 implements multiple algorithms. The handler *64* may retrieve the header information from the interface memory *48,* or may generate the header based on the location within the interface memory from which it retrieves the prepared data or command(s). By deciphering the message header, the router *61* and/or the accelerator *44* can direct the information within the message object to the desired destination, and cause that destination to process the information in a desired sequence.

Alternative embodiments for generating the message objects exist. For example, although each message object is described as including either data or a soft-configuration command, a single message object may include both data and one or more commands. Furthermore, although the message handler **64** is described as receiving the data and commands from the interface memory *48,* it may receive the data and commands directly from the processing unit *54.*

The generation of message objects is discussed further in previously cited U.S. Publication No. 2004/0181621 entitled COMPUTING MACHINE HAVING IMPROVED COMPUTING ARCHITECTURE AND RELATED SYSTEM AND METHOD.

Pipeline Accelerator

The pipeline accelerator *44* receives and deciphers the message objects from the message handler *64* and effectively directs the data and/or commands within the objects to the desired destination(s). This technique is particularly useful where the number of algorithms implemented by the processing unit *62* and the pipelines *74* are relatively small, and thus the router *61* can be omitted. Alternatively, where the number of algorithms implemented by the processing unit *62* or the number pipelines *74* is relatively large, the router *61* receives and deciphers the message objects from the message handler *64* and effectively directs the data and/or commands within the objects to the desired destination (s) within the accelerator *44.*

In one embodiment where there are small numbers of processing-unit algorithms and pipelines *74,* each pipeline simultaneously receives a message object and analyzes the header to determine whether or not it is an intended recipient of the message. If the message object is intended for a particular pipeline *74,* then that pipeline deciphers the message and processes the recovered data/command(s). If, however, the message object is not intended for a particular pipeline *74,* then that pipeline ignores the message object. For example, suppose a message object includes data for processing by the pipeline *$74_1$*. Therefore, the pipeline *$74_1$* analyzes the message header, determines that it is an intended destination for the data, recovers the data from the message, and processes the recovered data. Conversely, each of the pipelines *$74_2$ - $74_n$* analyzes the message header, determines that it is not an intended destination for the data, and thus does not recover or process the data. If the data within the message object is intended for multiple pipelines *74,* then the message handler *64* generates and sends a sequence of respective message objects that include the same data, one message for each destination pipeline. Alternatively, the message handler *64* may simultaneously send the data to all of the destination pipelines *74* by sending a single message object having a header that identifies all of the destination pipelines. Recovering data and soft-configuration commands from message objects is discussed further in previously cited U.S. Publication No. 2004/0136241 entitled PIPELINE ACCELERATOR FOR IMPROVED COMPUTING ARCHITECTURE AND RELATED SYSTEM AND METHOD.

In another embodiment where there are large numbers of processing-unit processes or pipelines *74,* each pipeline receives message objects from the router *61.* Although the router *61* should ideally send message objects only to the target pipeline *74,* the target pipeline still analyzes the header to determine whether or not it is an intended recipient of the message. Such an analysis identifies potential message routing errors, *i.e.,* exceptions. If the message object is intended for target pipeline *74,* then that pipeline deciphers the message and processes the recovered data/command(s). If, however, the message object is not intended for the target pipeline *74,* then that pipeline ignores the processing for that message object, and may also issue a new message to the host processor *42* indicating that a routing exception has occurred. Handling of routing exceptions is discussed in previously cited U.S. Publication No. 2004/0181621 entitled COMPUTING MACHINE HAVING IMPROVED COMPUTING ARCHITECTURE AND RELATED SYSTEM AND METHOD.

Next, the pipeline accelerator *44* processes the incoming data and/or commands recovered from the message objects.

For data, the destination pipeline or pipelines *74* perform a respective operation or operations on the data. As discussed in conjunction with **FIG. 2**, because the pipelines *74* do not execute program instructions, they can often process the data at a rate that is substantially the same as the frequency of the pipeline clock.

In a first embodiment, a single pipeline *74* generates resulting data by processing the incoming data.

In a second embodiment, multiple pipelines *74* generate resulting data by serially processing the incoming data. For example, the pipeline *74* may generate first intermediate data by performing a first operation on the incoming data. Next, the pipeline $74_2$ may generate second intermediate data by performing a second operation on the first intermediate data, and so on, until the final pipeline *74* in the chain generates the result data.

In a third embodiment, multiple pipelines *74* generate the resulting data by processing the incoming data in parallel. For example, the pipeline $74_1$ may generate a first set of resulting data by performing a first operation on a first set of the incoming data. At the same time, the pipeline $74_2$ may generate a second set of resulting data by performing a second operation on a second set of the incoming data, and so on.

Alternatively, the pipelines *74* may generate resulting data from the incoming data according to any combination of the above three embodiments. For example, the pipeline $74_1$ may generate a first set of resulting data by performing a first operation on a first set of the incoming data. At the same time, the pipelines $74_2$ and $74_n$ may generate a second set of resulting data by serially performing second and third operations on a second set of the incoming data.

In any of the above embodiments and alternatives, a single pipeline *74* may perform multiple operations. For example, the pipeline $74_1$ may receive data, generate first intermediate data by performing a first operation on the received data, temporarily store the first intermediated data, generate second intermediate data by performing a second operation on the first intermediate data, and so on, until it generates result data. There are a number of techniques for causing the pipeline $74_1$ to switch from performing the first operation to performing the second operation, and so on. Such techniques are discussed in previously cited U.S. Patent App. Serial No. 10/683.929 entitled PIPELINE ACCELERATOR FOR IMPROVED COMPUTING ARCHITECTURE AND RELATED SYSTEM AND METHOD (Attorney Docket No. 1934-13-3).

For a soft-configuration command, the accelerator *44* sets the bits in the corresponding soft-configuration register(s) (not shown) as indicated by the message header. As discussed above, setting these bits typically changes the functioning of the accelerator *44* without changing its interconnection layout. This is similar to setting bits in a control register of a processor for, *e.g.,* setting an external pin as an input pin or an output pin or selecting an addressing mode. Furthermore, a soft-configuration command can partition a register or table (an array of registers) for holding data. Another soft-configuration command or an operation performed by the accelerator *44* may load data into the soft-configured register or table. Soft configuration of the accelerator *44* is discussed further in previously cited U.S. Publication No. 2004/0136241 entitled PIPELINE ACCELERATOR FOR IMPROVED COMPUTING ARCHITECTURE AND RELATED SYSTEM AND METHOD (Attorney Docket No. 1934-13-3).

Next, the pipeline accelerator *44* provides the resulting data to the host processor *42* via the router *61* (or directly if the router is omitted) for further processing.

Alternatively, the accelerator *44* provides the resulting data to the remote destination (**FIG. 4**) either directly via the output port *94* **(FIG. 4),** or indirectly via the router *61* (if present), the bus *50,* the host processor *42,* and the output port *58.* Consequently, in this alternative embodiment, the resulting data generated by the accelerator *44* is the final processed data.

When the accelerator *44* provides the resulting data to the host processor *42* - either for further processing or for pass through to the remote device **(FIG. 4)** - it sends this data in a message object that has the same format as the message objects generated by the message handler *64*. Like the message objects generated by the message handler *64,* the message objects generated by the accelerator *44* include headers that specify, e.g., the destination and the priority of the resulting data. For example, the header may instruct the message handler *64* to pass through the resulting data to the remote device via the port *58,* or may specify which portion of the program executed by the processing unit *62* is to control the processing of the data. By using the same message format, the accelerator *44* has the same interface layer as the host processor *42.* This facilitates designing and modifying the peer-vector machine *40,* particularly if the interface layer is an industry standard.

The structure and operation of the pipeline accelerator *44* and the pipelines *66* are discussed further in previously cited U.S. Publication No. 2004/0136241 entitled PIPELINE ACCELERATOR FOR IMPROVED COMPUTING ARCHITECTURE AND RELATED SYSTEM AND METHOD (Attorney Docket No. 1934-13-3).

## Receiving And Processing From the Pipeline Accelerator With the Host Processor

When it receives a message object from the accelerator *44,* the message handler *64* first deciphers the message header and directs the recovered data to the indicated destination.

If the header indicates that the data is to be passed to the remote device (**FIG. 4**) via the port *58,* then the message handler *64* may provide the data directly to the port *58,* or to a port FIFO buffer (not shown) formed in the interface memory *48* or in another memory and then from the buffer to the port **58.** Multiple ports **58** and multiple respective remote devices are also contemplated.

If, however, the header indicates that the processing unit **62** is to further process the data, then the message handler **62** stores the data in a location of the interface memory **48** that corresponds to the portion of the processing-unit program that is to control the processing of the data. More specifically, the same header now indirectly indicates which portion(s) of the program executed by the processing unit **54** is(are) to control the processing of the data. Consequently, the message handler **64** stores the data in the location (such as a FIFO) of the interface memory **48** corresponding to this program portion.

As discussed above, the interface memory **48** acts as a buffer between the accelerator **44** and the processing unit **62,** and thus allows the transfer of data when the processing unit is not synchronized to the accelerator. For example, this lack of synchronization may occur when the accelerator **44** processes data faster than the processing unit **62.** By using the interface memory **48,** the accelerator **44** is not slowed by the slower response of the processing unit **62.** This also avoids the inefficiency penalties associated with the processing unit's indeterminate response time to handling interrupts. The indeterminate handling by the processing unit **62** of the accelerator **44** output messages would unnecessarily complicate the accelerator's design by forcing the designer to provide either: **a)** storage and handling for the backed up output messages, or **b)** idling controls throughout the pipeline to prevent the backed up messages from being overwritten. Therefore, the use of interface memory **48,** which acts as a buffer between the accelerator **44** and the processing unit **62,** has several desirable consequences a) accelerators are easier to design, b) accelerators need less infrastructure and can hold larger PLIC applications, c) accelerators can be streamlined to run faster because output data is not "blocked" by a slower processor.

Then, for data that the message handler **64** has stored in the interface memory **48,** the processing unit **62** retrieves the data from the interface memory. The processing unit **62** may poll the interface memory **48** to determine when new data has arrived in a particular location, or the message handler **64** may generate an interrupt or other signal that notifies the processing unit of the data's arrival. In one embodiment, before the processing unit **62** retrieves data, the message handler **64** generates a message object that includes the data. More specifically, one may design the program executed by the processing unit **62** to receive data in message objects. The message handler **64,** therefore, could store a message object in the interface memory **48** instead of storing only the data. But a message object typically occupies significantly more memory space than does the data it contains. Consequently, to save memory, the message handler **64** deciphers a message object from the pipeline accelerator **44,** stores the data in the memory **48,** and then effectively regenerates the message object when the processing unit **62** is ready to receive the data. Then, the processing unit **62** deciphers the message object and processes the data under the control of the program portion identified in the message header.

Next, the processor unit **62** processes the retrieved data under the control of the destination portion of the program, generates processed data, and stores the processed data in a location of the interface memory **48** that corresponds to the intended destination of the processed data.

Then, the message handler **64** retrieves the processed data and provides it to the indicated destination. To retrieve the processed data, the message handler **64** may poll the memory **48** to determine when the data has arrived, or the processing unit **62** may notify the message handler of the data's arrival with an interrupt or other signal. To provide the processed data to its intended destination, the message handler **64** may generate a message object that includes the data, and send the message object back to the accelerator **44** for further processing of the data. Or, the handler **56** may send the data to the port **58,** or to another location of the memory **48** for further processing by the processing unit **62.**

The host processor's receiving and processing of data from the pipeline accelerator **44** is discussed further in previously cited U.S. Publication No. 2004/0181621 entitled COMPUTING MACHINE HAVING IMPROVED COMPUTING ARCHITECTURE AND RELATED SYSTEM AND METHOD (Attorney Docket No. 1934-12-3).

## Alternative Data Processing Techniques Using the Peer-Vector Machine

Still referring to **FIG. 3,** there exist alternatives to the above-described embodiments in which the host processor **42** receives and processes data, and then sends the data to the pipeline accelerator **44** for further processing.

in one alternative, the host processor **42** performs all of the processing on at least some of the data, and thus does not send this data to the pipeline accelerator **44** for further processing.

In another alternative, the pipeline accelerator **44** receives the raw data directly from the remote device (**FIG. 4)** via the port **92 (FIG.4)** and processes the raw data.

The accelerator **44** may then send the processed data directly back to the remote device via the port **94,** or may send the processed data to the host processor **42** for further processing. In the latter case, the accelerator **44** may encapsulate the data in message objects as discussed above.

In yet another alternative, the accelerator **44** may include, in addition to the hardwired pipelines **74,** one or more instruction-executing processors, such as a Digital Signal Processor (DSP), to complement the number-crunching abilities of the pipelines.

## Example Implementation of the Peer-Vector Machine

Still referring to **FIG. 3**, in one embodiment, the pipeline bus **50** is a standard 133 MHz PCI bus, the pipelines **74** are included on one or more standard PMC cards, and the memory **52** is one or flash memories that are each located on a respective PMC card.

## Example Application of the Peer-Vector Machine

**FIG. 4** is a block diagram of a sonar system **80** that incorporates the peer-vector machine **40** of **FIG. 3** according to an embodiment of the invention. In addition to the machine 40, the system **80** includes an array **82** of transducer elements $84_1$ - $84_n$ for receiving and transmitting sonar signals, digital-to-analog converters (DACs) $86_1$ - $86_n$, analog-to-digital converters (ADCs) $88_1$ - $88_n$, and a data interface **90**. Because generating and processing sonar signals are often mathematically intensive functions, the machine **40** can often perform these functions more quickly and efficiently than a conventional computing machine - such as the multi-processor machine **10 (FIG. 1)** - can for a given clock frequency as discussed above in conjunction with **FIG. 3**.

During a transmit mode of operation, the array **82** transmits a sonar signal into a medium such as water (not shown). First, the peer-vector machine **40** converts raw signal data received on the port **92** into *n* digital signals, one for each of the array elements **84.** The magnitudes and phases of these signals dictate the transmission-beam pattern of the array **82.** Next, the machine **40** provides these digital signals to the interface **90,** which provides these signals to the respective DACs **86** for conversion into respective analog signals. For example, the interface **90** may act as a buffer that serially receives the digital signals from the machine **40,** stores these signals until it receives and buffers all n of them, and then simultaneously provides these sequential signal samples to the respective DACs **86.** Then, the transducer elements **84** convert these analog signals into respective soundwaves, which interfere with one another to form the beams of a sonar signal.

During a receive mode of operation, the array **82** receives a sonar signal from the medium (not shown). The received sonar signal is composed of the portion of the transmitted sonar signal that is reflected by remote objects and the sound energy emitted by the environment and the remote objects. First, the transducer elements **84** receive respective soundwaves that compose the sonar signal, convert these soundwaves into n analog signals, and provide these analog signals to the ADCs **88** for conversion into n respective digital signals. Next, the interface **90** provides these digital signals to the peer-vector machine **40** for processing. For example, the interface **90** may act as a buffer that receives the digital signals from the ADCs **88** in parallel and then serially provides these signals to the machine **40.** The processing that the machine **40** performs on the digital signals dictates the receive-beam pattern of the array **82.** Additional processing steps such as filtering, band shifting, spectral transformation (e.g., the Fourier Transform), and convolution are applied to the digital signals. The machine **40** then provides the processed signal data via the port **94** to another apparatus such as a display device for viewing located objects.

Although discussed in conjunction with the sonar system **80,** systems other than sonar systems may also incorporate the peer-vector machine **40.**

The preceding discussion is presented to enable a person skilled in the art to make and use the invention. Various modifications to the embodiments will be readily apparent to those skilled in the art, and the generic principles herein may be applied to other embodiments and applications. Thus, the present invention is not intended to be limited to the embodiments shown, but is to be accorded the widest scope consistent with the principles and features disclosed herein.

## Claims

1. A peer-vector machine (40), comprising:

    a host processor (42) operable to execute a program, and, in response to the program, operable to generate first host data;
    a pipeline accelerator (44) including at least one hardwired pipeline, the pipeline accelerator being coupled to the host processor (42) and being operable to receive the first host data and to generate first pipeline data from the first host data, at least a portion of the pipeline accelerator having configurable internal interconnections, and
    a firmware memory (52) operable to store configuration firmware for configuring the internal interconnections,

    **characterized in that** the peer-vector machine (40) further comprises,
    an accelerator-configuration registry (70) coupled to the host processor (42) and operable to store the configuration firmware separate from the program, wherein the host processor (42) is operable to receive the configuration firmware from the registry (70) and to configure the pipeline accelerator (44) for generating the first pipeline data by providing the configuration firmware to the pipeline accelerator before executing the program by loading the configuration firmware into the firmware memory,
    a single bus (50) for allowing communication between the host processor and the pipeline accelerator, and

wherein the host processor and the pipeline accelerator communicate via a message that includes the first host data and a header containing the intended destination hardwired pipeline of the data.

2. The peer-vector machine (40) of claim 1 wherein the host processor (40) is further operable to:

   receive second data; and
   generate the first host data from the second data.

3. The peer-vector machine (40) of any one of the preceding claims wherein the host processor (42) is further operable to:

   receive the first pipeline data from the pipeline accelerator; and
   process the first pipeline data.

4. The peer-vector machine (40) of any one of the preceding claims, further comprising:

   an interface memory (48) coupled to the host processor (42) and to the pipeline accelerator (44) and having a first memory section;

   wherein the host processor (42) is operable to,

   store the first host data in the first memory section, and
   provide the first host data from the first memory section to the pipeline accelerator (44).

5. The peer-vector machine (40) of any one of the preceding claims, further comprising:

   an interface memory (48) coupled to the host processor (42) and to the pipeline accelerator (44) and having first and second memory sections;

   wherein the host processor (42) is operable to,

   store the first host data in the first memory section,
   provide the first host data from the first memory section to the pipeline accelerator (44),
   receive the first pipeline data from the pipeline accelerator (44),
   store the first pipeline data in the second memory section,
   retrieve the first pipeline data from the second memory section to the host processor (42), and
   process the first pipeline data.

6. A method, comprising:

   generating first host data by executing a program with a host processor (42);
   generating first pipeline data from the first host data with a pipeline accelerator (44) including at least one hardwired pipeline and being coupled to the host processor;

   **characterized in**,

   receiving from a registry (70) coupled with the host processor (42) pipeline-accelerator configuration information that is separate from the program, and
   configuring the pipeline accelerator (44) for generating the first pipeline data by providing the configuration information to the pipeline accelerator with the host processor (42) before executing the program,
   wherein said providing the configuration information includes loading the configuration information into a firmware memory operable to store the configuration information for configuring internal interconnections of the pipeline accelerator, and
   wherein said generating first pipeline data includes sending over a single bus (50) to the pipeline accelerator a message including the first host data and a header containing the intended destination hardwired pipeline.

7. The method of claim 6 wherein generating the first host data comprises generating the first host data from second pipeline data generated by the pipeline accelerator (44).

8. The method of claims 6 or 7, further comprising generating second host data from the first pipeline data by executing the program with the host processor (42).

**Patentansprüche**

1. Peer-Vektor-Maschine (40), aufweisend:

   einen Wirtsprozessor (42), der zum Ausführen eines Programmes betreibbar ist und der, in Abhängigkeit von dem Programm, betreibbar ist, um erste Wirtsdaten zu generieren;
   einen Pipelinebeschleuniger (44) mit mindestens einer festverdrahteten Pipeline, wobei der Pipelinebeschleuniger mit dem Wirtsprozessor (42) gekoppelt und betreibbar ist, um die ersten Wirtsdaten entgegenzunehmen und erste Pipeline-Daten aus den ersten Wirtsdaten zu erzeugen, wobei mindestens ein Teilbereich des Pipelinebeschleunigers konfigurierbare interne Zusammenschaltungen aufweist, und

einen Firmwarespeicher (52), der zum Speichern einer Konfigurations-Firmware zum Konfigurieren der internen Zusammenschaltungen betreibbar ist,

**dadurch gekennzeichnet, dass** die Peer-Vektor-Maschine (40) ferner aufweist:

eine mit dem Wirtsprozessor (42) gekoppelte und zum Speichern der Konfigurations-Firmware getrennt von dem Programm betreibbare Beschleunigerkonfigurations-Registratur (70),

wobei der Wirtsprozessor (42) betreibbar ist, um die Konfigurations-Firmware aus der Registratur (70) entgegenzunehmen und den Pipelinebeschleuniger (44) zum Generieren der ersten Pipelinedaten durch Bereitstellen der Konfigurations-Firmware an den Pipelinebeschleuniger vor dem Ausführen des Programmes durch Laden der Konfigurations-Firmware in den Firmwarespeicher zu konfigurieren, einen einzelnen Bus (50) zum Ermöglichen von Kommunikation zwischen dem Wirtsprozessor und dem Pipelinebeschleuniger, und wobei der Wirtsprozessor und der Pipelinebeschleuniger über eine Nachricht kommunizieren, welche die ersten Wirtsdaten und einen Nachrichtenkopf beinhaltet, welcher die beabsichtigte festverdrahtete Zielpipeline der Daten enthält.

2. Peer-Vektor-Maschine (40) nach Anspruch 1, wobei der Wirtsprozessor (40) ferner betreibbar ist, um:

zweite Daten entgegenzunehmen; und die ersten Wirtsdaten aus den zweiten Daten zu generieren.

3. Peer-Vektor-Maschine (40) nach irgendeinem der vorstehenden Ansprüche, wobei der Wirtsprozessor (42) ferner betreibbar ist, um:

erste Pipeline-Daten aus dem Pipelinebeschleuniger entgegenzunehmen; und die ersten Pipeline-Daten zu verarbeiten.

4. Peer-Vektor-Maschine (40) nach irgendeinem der vorstehendem Ansprüche, ferner aufweisend:

einen mit dem Wirtsprozessor (42) und dem Pipelinebeschleuniger (40) gekoppelten und einen ersten Speicherabschnitt aufweisenden Interface-Speicher (48);

wobei der Wirtsprozessor (42) betreibbar ist, um die ersten Wirtsdaten in dem ersten Speicherabschnitt zu speichern, und die ersten Wirtsdaten aus dem ersten Speicherabschnitt dem Pipelinebeschleuniger (44) bereitzustellen.

5. Peer-Vektor-Maschine (40) nach irgendeinem der vorstehenden Ansprüche, ferner aufweisend:

einen mit dem Wirtsprozessor (42) und dem Pipelinebeschleuniger (44) gekoppelten und einen ersten Speicherabschnitt und einen zweiten Speicherabschnitt aufweisenden Interface-Speicher (48);

wobei der Wirtsprozessor (42) betreibbar ist, um:

die ersten Wirtsdaten in dem ersten Speicherabschnitt zu speichern, die in dem ersten Speicherabschnitt gespeicherten Wirtsdaten dem Pipelinebeschleuniger (44) bereitzustellen, die ersten Pipeline-Daten von dem Pipelinebeschleuniger (44) entgegenzunehmen, die ersten Pipeline-Daten in dem zweiten Speicherabschnitt zu speichern, die ersten Pipeline-Daten aus dem zweiten Speicherabschnitt für den Wirtsprozessor (42) abzurufen, und die ersten Pipeline-Daten zu verarbeiten.

6. Verfahren, aufweisend:

Erzeugen erster Wirtsdaten durch Ausführen eines Programmes auf einem Wirtsprozessor (42); Erzeugen erster Pipeline-Daten aus den ersten Wirtsdaten mit einem Pipelinebeschleuniger (44), der mindestens eine festverdrahtete Pipeline aufweist und mit dem Wirtsprozessor gekoppelt ist; **gekennzeichnet durch** Entgegennehmen von Pipelinebeschleuniger-Konfigurationsinformationen, die vom Programm getrennt sind, von einer Registratur (70), die mit dem Wirtsprozessor (42) gekoppelt ist, und Konfigurieren des Pipelinebeschleunigers (44) zum Erzeugen der ersten Pipeline-Daten **durch** Bereitstellen der Konfigurationsinformation für den Pipelinebeschleuniger **durch** den Wirtsprozessor (42) vor dem Ausführen des Programmes,

wobei das Bereitstellen der Konfigurationsinformationen das Laden der Konfigurationsinformationen in einen Firmwarespeicher einschließt, welcher betreibbar ist, um die Konfigurationsinformationen zum Konfigurieren interner Zusammenschaltungen des Pipelinebeschleunigers zu speichern, und wobei das Erzeugen der ersten Pipeline-Daten das Senden einer Nachricht einschließlich der ersten Wirtsdaten und eines die beabsichtigte festverdrahtete Zielpipeline enthaltenden Nachrichtenkopfes über einen einzelnen Bus (50) an den Pipelinebeschleuniger beinhaltet.

**7.** Verfahren nach Anspruch 6, wobei das Erzeugen der ersten Wirtsdaten das Erzeugen der ersten Wirtsdaten aus durch den Pipelinebeschleuniger (44) generierten zweiten Pipeline-Daten beinhaltet.

**8.** Verfahren nach Anspruch 6 oder 7, ferner aufweisend das Generieren von zweiten Wirtsdaten aus den ersten Pipeline-Daten durch Ausführen des Programmes auf dem Wirtsprozessor (42).

**Revendications**

**1.** Machine vectorielle poste à poste (40) comprenant :

un processeur hôte (42) apte à exécuter un programme et, en réponse au programme, apte à produire des premières données hôte,
un accélérateur en pipe-line (44) incluant au moins un pipe-line câblé couplé au processeur hôte (42) et apte à recevoir les premières données hôte et à produire des premières données en pipe-line à partir des premières données hôte, au moins une partie de l'accélérateur en pipe-line ayant des interconnexions internes configurables, et
une mémoire de microprogramme (52) apte à mémoriser un microprogramme de configuration pour configurer des interconnexions internes,

**caractérisée en ce que** la machine vectorielle poste à poste (40) comprend en outre :

un registre accélérateur de configuration (70) couplé au processeur hôte (42) et apte à mémoriser le microprogramme de configuration séparé du programme,

dans laquelle le processeur hôte (42) est apte à recevoir le microprogramme de configuration du registre (70) et à configurer l'accélérateur en pipe-line (44) pour produire les premières données pipe-line en fournissant le microprogramme de configuration à l'accélérateur en pipe-line avant d'exécuter le programme en chargeant le microprogramme de configuration dans la mémoire de microprogramme,
un bus unique (50) pour permettre des communications entre le processeur hôte et l'accélérateur en pipe-line, et
dans laquelle le processeur hôte et l'accélérateur en pipe-line communiquent par un message qui comprend les premières données hôte et une en-tête contenant le pipe-line câblé de destination visée des données.

**2.** Machine vectorielle poste à poste (40) selon la revendication 1, dans laquelle le processeur hôte (42) est en outre actionnable pour :

recevoir des secondes données ; et
produire les premières données hôte à partir des secondes données.

**3.** Machine vectorielle poste à poste (40) selon l'une quelconque des revendications précédentes, dans laquelle le processeur hôte (42) est en outre actionnable pour :

recevoir les premières données en pipe-line de l'accélérateur en pipe-line ; et
traiter les premières données en pipe-line.

**4.** Machine vectorielle poste à poste (40) selon l'une quelconque des revendications précédentes, comprenant en outre :

une mémoire d'interface (48) couplée au processeur hôte (42) et à l'accélérateur en pipe-line (44) et ayant une première partie de mémoire,

dans laquelle le processeur hôte (42) est apte à:

mémoriser les premières données hôte dans la première partie de mémoire , et
fournir les premières données hôte à partir de la première partie de mémoire vers l'accélérateur en pipe-line (44) .

**5.** Machine vectorielle poste à poste (40) selon l'une quelconque des revendications précédentes, comprenant en outre :

une mémoire d'interface (48) couplée au processeur hôte (42) et à l'accélérateur en pipe-line (44) et ayant des première et seconde parties de mémoire ;

dans laquelle le processeur hôte (42) est apte à :

mémoriser les premières données hôte dans la première partie de mémoire,
fournir les premières données hôte à partir de la première partie de mémoire à l'accélérateur en pipe-line (44),
recevoir les premières données en pipe-line à partir de l'accélérateur en pipe-line (44),
mémoriser les premières données en pipe-line dans la seconde partie de mémoire,
récupérer les premières données en pipe-line à partir de la seconde partie de mémoire vers le processeur hôte (42), et

traiter les premières données en pipe-line.

6. Procédé comprenant :

produire des premières données hôte en exécutant un programme avec un processeur hôte (42) ;

produire des premières données en pipe-line à partir des premières données hôte avec un accélérateur en pipe-line (44) incluant au moins un pipe-line câblé et étant couplé au processeur hôte,

**caractérisé par** :

recevoir à partir d'un registre (70) couplé au processeur hôte (42), des informations de configuration d'accélérateur en pipe-line qui sont distinctes du programme, et

configurer l'accélérateur en pipe-line (44) pour produire les premières données en pipe-line en fournissant les informations de configuration à l'accélérateur en pipe-line, avec le processeur hôte (42), avant d'exécuter le programme,

dans lequel la fourniture des informations de configuration comprend le chargement des informations de configuration dans une mémoire de microprogramme actionnable pour mémoriser les informations de configuration pour configurer des interconnections internes de l'accélérateur en pipe-line, et dans lequel la génération des premières données en pipe-line inclut l'envoi sur un bus unique (50) vers l'accélérateur en pipe-line (44) d'un message incluant les premières données hôte et une en-tête contenant le pipe-line câblée de destination visée.

7. Procédé selon la revendication 6, dans lequel la génération des premières données hôte comprend la génération des premières données hôte à partir de secondes données en pipeline produites par l'accélérateur en pipeline (44).

8. Procédé selon la revendication 6 ou 7, comprenant en outre la génération de secondes données hôtes à partir des premières données en pipeline en exécutant le programme avec le processeur hôte (42).

FIG. 1 (PRIOR ART)

EP 1 570 344 B1

EP 1 570 344 B1

RAW DATA IN

OPERATOR $32_1$

OPERATOR $32_2$

• • • •

OPERATOR $32_n$

PROCESSED DATA OUT

CLOCK

30

**FIG. 2**

FIG. 3

PROCESSOR CLOCK

PROCESSING UNIT MEMORY 66

ACCELERATOR CONFIGURATION REGISTRY 70

MESSAGE CONFIGURATION REGISTRY 72

HANDLER MEMORY 68

INTERFACE MEMORY 48

PROCESSING UNIT 62

HOST PROCESSOR

MESSAGE HANDLER 64

RAW DATA IN 54

PROCESSED DATA OUT 58

PIPELINE BUS 50

ROUTER 61

HARDWIRED PIPELINE 74₁

HARDWIRED PIPELINE 74₂

PIPELINE ACCELERATOR

HARDWIRED PIPELINE 74ₙ

PIPELINE CLOCK

FIRMWARE MEMORY 52

42

44

46

40

EP 1 570 344 B1

18

**FIG. 4**

EP 1 570 344 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 42250302 P
- US 20040181621 A
- EP 0945788 A
- US 20040136241 A
- US 20040170070 A
- US 683929 A

### Non-patent literature cited in the description

- **S. BAKSHI et al.** Partitioning and Pipelining for Performance-Constrained Hardrward/Software Systems. *IEEE Trans. on VLSI Systems,* December 1999, vol. 7 (4), 419-432
- **G. LECURIEUX-LAFAYETTE.** Un seul FPGA dope le traitement d'images. *Electronique, CEP communication,* 1996, vol. 98 (55), 101-103